# FASCICULE DE BREVET EUROPEEN

(11) **EP 1 112 886 B1**
(45) Date de publication et mention de la délivrance du brevet: **14.04.2004**
(21) Numéro de dépôt: 00403662.0
(22) Date de dépôt: 22.12.2000
(51) Int. Cl.: B60K 15/035

(54) **Clapet pour réservoir à carburant de véhicule automobile**
Ventil für den Kraftstofftank eines Kraftfahrzeuges
Valve for the fuel tank of a motor vehicle

(30) Priorité: 23.12.1999 FR 9916354
(43) Date de publication de la demande: 04.07.2001
(73) Titulaire: COMPAGNIE PLASTIC OMNIUM, 69007 Lyon (FR)
(72) Inventeur: Rosseel, Alexis, 60200 Compiegne (FR)
(74) Mandataire: Tanty, François

(56) Documents cités:
- DE-A- 4 400 450
- US-A- 5 259 412
- US-A- 5 261 439

## Description

La présente invention concerne un clapet pour réservoir à carburant de véhicule automobile.

L'invention concerne plus particulièrement un clapet destiné à être relié à un circuit de dégazage pour d'une part permettre l'évacuation de l'air contenu dans le réservoir lors de son remplissage et d'autre part permettre au réservoir de respirer.

Le circuit de dégazage communique habituellement avec l'atmosphère au travers d'un filtre à charbon actif, encore appelé canister, destiné à empêcher le rejet dans l'atmosphère des vapeurs de carburant.

Il est souhaitable d'empêcher que des gouttelettes de carburant ne soient entraînées lors du roulage dans le circuit de dégazage et atteignent le canister, car cela le saturerait rapidement et lui ferait perdre son efficacité.

Le brevet US 5 261 439 qui sert de base pour la présentation en deux parties de la revendication 1, décrit un dispositif pour évacuer la vapeur de carburant d'un réservoir à carburant. Ce dispositif comporte un ensemble formant valve comprenant une membrane apte à venir s'appliquer sur une nervure annulaire d'un corps du dispositif afin de fermer le passage vers le canister. Un autre ensemble formant valve communiquant avec la source de dépression est monté dans une ouverture centrale de la membrane, cet ensemble comportant un passage mettant en communication l'intérieur du réservoir avec une source de dépression.

Le brevet US 5 259 412 décrit un dispositif permettant d'alimenter en carburant un moteur de véhicule automobile. Ce brevet ne décrit pas un dispositif destiné à être relié à un circuit de dégazage.

La demande de brevet DE 44 00 450 décrit un dispositif commandé par la pression du carburant dans un circuit de retour, ce dispositif étant dépourvu d'élément d'obturation comportant un orifice mettant en communication l'intérieur du réservoir avec le circuit de retour.

La présente invention a pour objet un nouveau clapet qui puisse à la fois assurer une ventilation efficace du réservoir lors de son remplissage, éviter le sur-remplissage et permettre ensuite au réservoir de respirer, tout en réduisant le risque que du carburant liquide ne gagne le circuit de dégazage pendant le roulage.

Le clapet selon l'invention est destiné à être relié à un circuit de dégazage, définissant un passage pour un écoulement gazeux quittant le réservoir et le clapet, comportant au moins un organe mobile pouvant être contrôlé en déplacement pour modifier la configuration du clapet et un premier élément d'obturation mobile comportant un orifice et apte à être entraîné en déplacement par l'organe mobile d'une première position vers une deuxième position, le passage de la première position à la deuxième réduisant la section de passage offerte à l'écoulement gazeux.

Grâce à l'invention, le clapet peut être configuré de telle sorte que la ventilation du réservoir s'effectue soit avec un débit gazeux important au moment du remplissage soit avec un faible débit et avec un faible risque de projection de carburant liquide vers le canister notamment lors du roulage.

Dans une réalisation particulière, la configuration du clapet est modifiée grâce à l'énergie d'une pompe à carburant, laquelle est avantageusement la même que celle servant à envoyer le carburant aux injecteurs du moteur.

Le clapet est avantageusement agencé de manière à ce que ledit organe mobile puisse être entraîné en déplacement sous l'effet du fonctionnement de la pompe à carburant.

Dans une réalisation particulière, le clapet est agencé de manière à ce que l'organe mobile soit entraîné en déplacement de la première position vers la deuxième position sous l'effet d'une variation de pression créée par le fonctionnement de la pompe.

Avantageusement, ladite variation de pression est une dépression créée par effet Venturi.

Dans une réalisation particulière, le clapet comporte un deuxième élément d'obturation apte à obturer l'orifice du premier élément d'obturation.

Ce deuxième élément d'obturation obture avantageusement ledit orifice en cas de retournement accidentel du véhicule.

Dans une réalisation particulière, le deuxième élément d'obturation présente une flottabilité positive de manière à obturer ledit orifice sous l'effet d'une vague de carburant dans le réservoir.

Dans une réalisation particulière, le premier élément d'obturation s'applique contre un siège fixe dans sa deuxième position.

Dans une autre réalisation particulière, le clapet comporte un élément formant siège mobile, contre lequel s'applique le premier élément d'obturation lorsqu'il est dans sa deuxième position, d'obturation partielle.

Cet élément formant siège est avantageusement déplaçable entre une position dans laquelle il vient en butée contre ledit organe mobile et une position dans laquelle il vient en prise sur un rebord d'une partie fixe du clapet.

Dans une réalisation particulière, le premier élément d'obturation présente une flottabilité positive, le clapet étant agencé en outre de manière à ce que le premier élément d'obturation prenne sa position d'obturation partielle sous l'effet de la montée du carburant liquide dans le réservoir en fin de remplissage.

Dans une réalisation particulière, le premier élément d'obturation doit être déplacé vers le haut pour passer de la première position à la deuxième.

Dans une réalisation particulière, le clapet comporte :
- un organe mobile selon un axe sensiblement vertical, depuis une position inférieure lorsque le réservoir est en cours de remplissage et le moteur à l'arrêt à une position supérieure lorsque le moteur est en marche,
- un élément formant siège, mobile entre une position basse dans laquelle il s'accroche sur une partie fixe du clapet et supporte l'organe mobile et une position haute dans laquelle il vient en butée contre ladite partie fixe,
- un premier élément d'obturation présentant un orifice et déplaçable, lorsque l'organe mobile est en position basse, entre une première position dans laquelle il est écarté dudit élément formant siège et une deuxième position dans laquelle il vient en appui contre ledit élément formant siège et réduit la section de passage offerte à l'écoulement gazeux quittant le clapet, en ne permettant le passage qu'à travers ledit orifice, ce premier élément d'obturation présentant une flottabilité positive de manière à passer de sa première position vers sa deuxième position sous l'effet de la montée du carburant dans le réservoir,
- un deuxième élément d'obturation mobile par rapport au premier entre une première position dans laquelle il pèse sur le premier élément d'obturation et une deuxième position dans laquelle il obture ledit orifice du premier élément d'obturation, ce deuxième élément d'obturation présentant une flottabilité positive de manière à passer de sa première position vers sa deuxième position sous l'effet de la montée du carburant liquide dans le réservoir et fermer le clapet lorsque le réservoir est en fin de remplissage et le moteur à l'arrêt, l'organe mobile étant alors dans sa position basse,
- clapet dans lequel, après la mise en marche du moteur, l'organe mobile est en position haute et a entraîné l'élément formant siège dans sa position haute avec le premier élément d'obturation maintenu en appui contre l'élément formant siège par ledit organe mobile, l'orifice du premier élément d'obturation étant alors normalement ouvert en l'absence de vagues de carburant dans le réservoir, le deuxième élément d'obturation étant apte à obturer cet orifice sous l'effet d'une vague de carburant dans le réservoir.

L'invention a encore pour objet un réservoir à carburant de véhicule automobile équipé d'un clapet tel que précité.

D'autres caractéristiques et avantages de la présente invention apparaîtront à la lecture de la description détaillée qui va suivre, d'exemples de réalisation non limitatifs de l'invention, et à l'examen du dessin annexé sur lequel :
- la figure 1 représente de façon schématique un clapet conforme à un premier exemple de réalisation de l'invention, lorsque le véhicule est au repos,
- la figure 2 représente le clapet de la figure 1 lorsque le moteur est en marche,
- la figure 3 est une vue en élévation d'un clapet conforme à un deuxième exemple de réalisation de l'invention,
- la figure 4 est une coupe longitudinale selon le trait de coupe IV-IV de la figure 3, le clapet étant représenté au début du remplissage,
- la figure 5 est une coupe analogue à la figure 4, représentant le clapet peu de temps avant la fin du remplissage,
- la figure 6 est une coupe analogue à la figure 4, représentant le clapet à la fin du remplissage,
- la figure 7 est une vue en élévation représentant le clapet lors du roulage, et
- la figure 8 est une coupe analogue à la figure 4, représentant le clapet pendant le roulage.

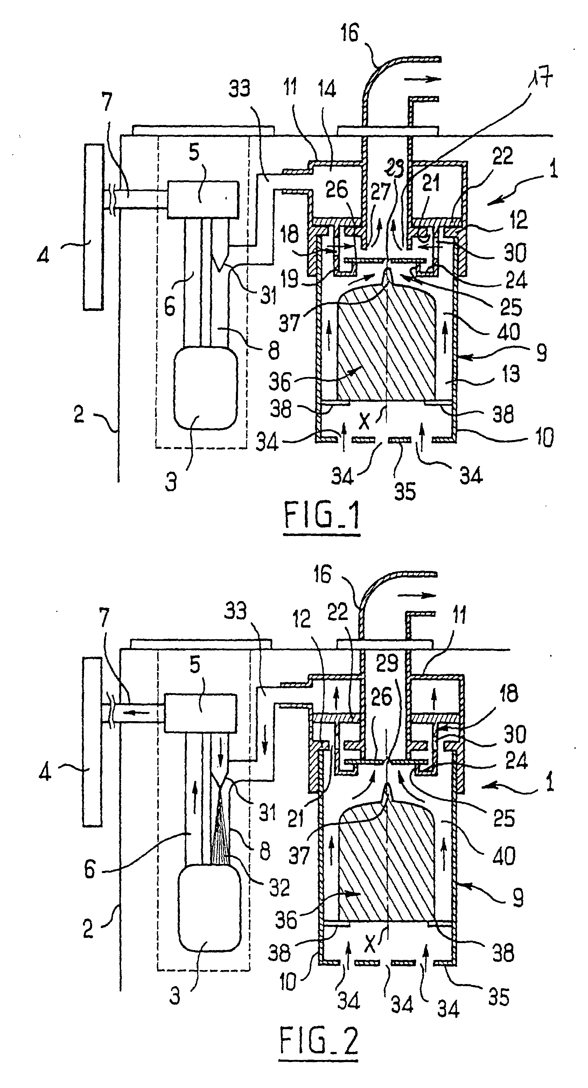

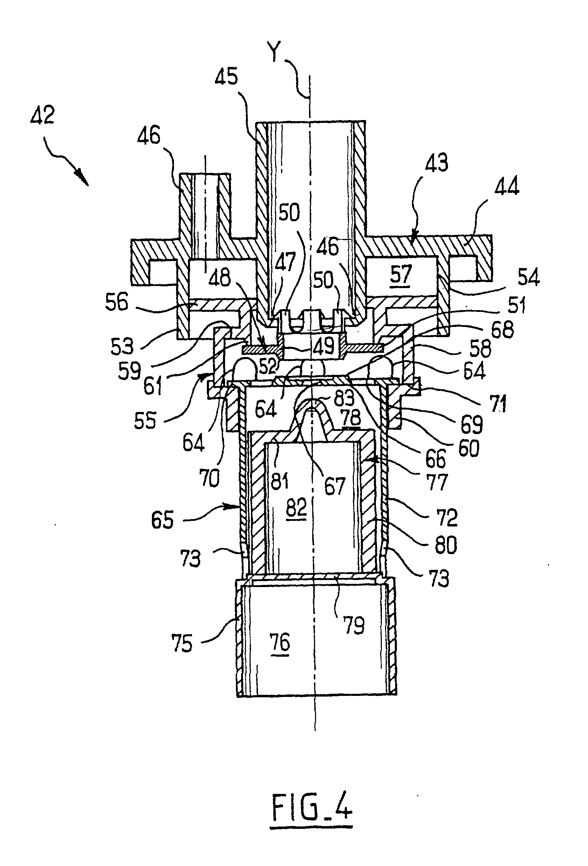

On a représenté sur les figures 1 et 2 un clapet 1 conforme à un premier exemple de réalisation de l'invention.

Ce clapet 1 équipe un réservoir à carburant 2 qui n'a été que partiellement représenté dans un souci de clarté du dessin.

Une pompe 3 prélève du carburant dans le réservoir 2 et l'envoie aux injecteurs 4 du moteur du véhicule.

Un régulateur 5 est relié à la pompe et aux injecteurs par des conduits 6 et 7 respectifs.

Ce régulateur 5 renvoie vers la pompe 3, par un conduit de retour 8, le carburant qui n'est pas consommé par les injecteurs 4.

La pompe 3 forme avantageusement avec le régulateur 5 et les conduits 6 et 8 un ensemble introduit d'un seul tenant dans le réservoir 2, ce que l'on a schématisé par des pointillés sur les figures 1 et 2.

Le clapet 1 comporte un corps 9, sensiblement tubulaire, allongé selon un axe X sensiblement vertical lorsque le véhicule repose sur une surface plane horizontale.

Ce corps est constitué dans l'exemple décrit par l'assemblage d'une partie inférieure 10 et d'une partie supérieure 11.

Une cloison transversale 12 perpendiculaire à l'axe X délimite à l'intérieur du corps 9 un compartiment inférieur 13 et un compartiment supérieur 14.

Un conduit 16 relié au circuit de dégazage traverse le compartiment supérieur 14 et la cloison 12 pour déboucher, par un orifice 17, dans le compartiment inférieur.

Le clapet 1 comporte un organe 18 mobile dans le corps 9, permettant de changer la configuration du clapet 1 selon que le réservoir est en cours de remplissage avec le moteur à l'arrêt ou que le véhicule roule.

Cet organe 18 comprend une jupe 19 pouvant coulisser selon l'axe X à la faveur d'un passage annulaire 21 traversant la cloison 12.

La jupe 19 se raccorde à son extrémité supérieure à un plateau annulaire 22 qui s'étend perpendiculairement à l'axe X dans le compartiment supérieur 14 et qui peut prendre appui sur la cloison 12 pour empêcher l'organe 18 de tomber dans le compartiment inférieur 13.

Le plateau 22 précité est dimensionné de manière à pouvoir coulisser avec un faible jeu dans le compartiment supérieur 14.

La jupe 19 se prolonge radialement vers l'intérieur, à son extrémité inférieure, pour former un rebord 24 dont l'extrémité 25 est relevée et supporte un premier élément d'obturation 26 se présentant sous la forme d'un disque.

Ce disque 26 peut se déplacer à l'intérieur de l'organe 18 entre l'extrémité inférieure 27 du conduit 16 et l'extrémité 25 du rebord 24.

Le disque 26 est traversé en son centre par un orifice 29.

La jupe 19 est pourvue à mi-hauteur environ d'ajours 30 dont le rôle sera expliqué plus loin.

Le clapet 1 exploite la dépression créée par l'effet Venturi au niveau d'une buse 31 intégrée au conduit de retour 8 pour entraîner en déplacement l'organe 18 et changer la configuration du clapet.

Cette buse 31 projette un jet de carburant 32 à l'intérieur du conduit avec une vitesse élevée comme illustré sur la figure 2, ce qui provoque par effet Venturi l'apparition d'une dépression autour du jet 32, laquelle est transmise au compartiment supérieur 14 du clapet 1 par un conduit d'aspiration 33.

Cette dépression tend à aspirer le plateau 22 et à soulever l'organe 18, lequel amène alors le disque 26 dans une position d'obturation partielle de l'orifice 17.

Le compartiment inférieur 13 communique avec l'intérieur du réservoir au travers d'ajours 34 ménagés dans la paroi inférieure 35 du clapet 1.

Un deuxième élément d'obturation 36, dont la face supérieure comporte un bossage 37 centré sur l'axe X, est mobile dans le compartiment inférieur 13.

Cet élément d'obturation 36 repose normalement par son poids, lorsque le réservoir est dans une position normale d'utilisation, contre des portées 38 et ménage avec la paroi latérale du clapet 1 un espace annulaire 40 permettant à l'air et aux vapeurs de carburant de gagner le conduit 16.

Des ouvertures non représentées sont réalisées entre les portées 38.

L'élément d'obturation 36 est apte à maintenir par son poids le disque 26 en position d'obturation du conduit 16 lorsqu'en cas de retournement accidentel du véhicule, le réservoir est à l'envers, le bossage 37 venant en outre obturer l'orifice 29 du disque 26.

Lorsque le véhicule est au repos et la pompe 3 arrêtée, l'air et les vapeurs de carburant peuvent pénétrer dans le compartiment inférieur 13 par les ajours 34, gagner l'espace annulaire 40 existant entre le deuxième élément d'obturation 36 et le corps du clapet 1 grâce aux ouvertures ménagées entre les portées 38, puis gagner le conduit 16 par les ajours 30 de l'organe 18 et l'orifice 29 du disque 26, comme illustré par des flèches sur la figure 1.

Lorsque le véhicule est en marche, le jet 32 crée une dépression dans le conduit 33, ce qui provoque l'aspiration du plateau 22 et son déplacement vers le haut.

Le disque 26 est alors plaqué contre le bord de l'orifice 17 du conduit 16, de sorte que ce dernier ne communique plus avec l'intérieur du réservoir qu'au travers de l'orifice 29 du disque 26.

Cet orifice 29 étant de section relativement faible, on permet ainsi au réservoir de continuer à respirer tout en empêchant les projections éventuelles dues aux vagues de carburant dans le réservoir 2 de pénétrer dans le conduit 16.

En cas de retournement accidentel du véhicule, le conduit 16 est isolé du réservoir 2 grâce au deuxième élément d'obturation 36 qui vient obturer avec le bossage 37 l'orifice 29 du disque 26.

On peut bien entendu adjoindre au clapet 1 qui a été décrit un ressort non représenté, destiné à compenser une partie du poids de l'obturateur et à permettre la fermeture du clapet en cas de retournement partiel du véhicule.

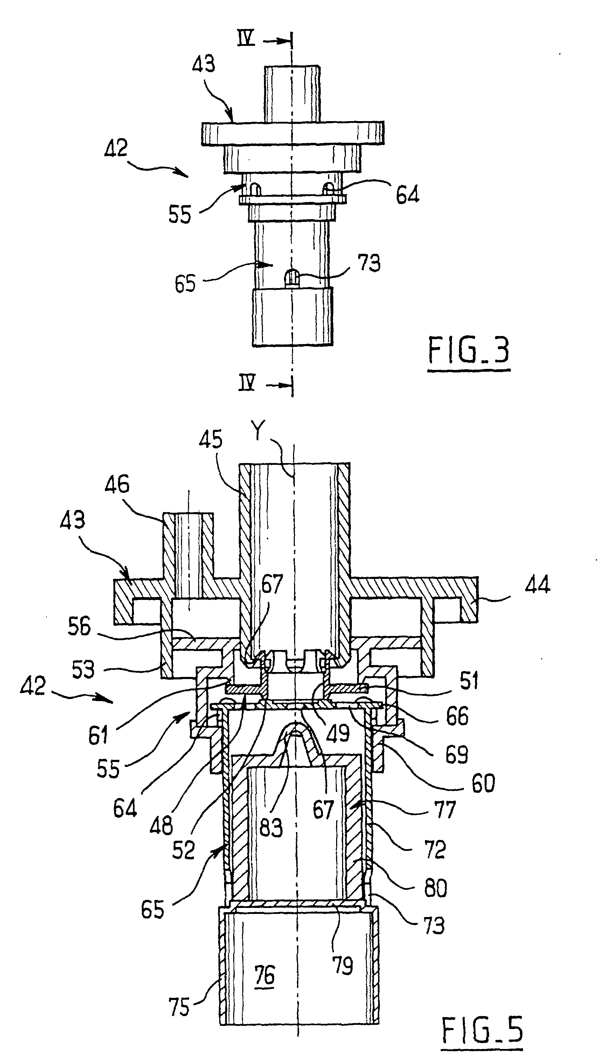

On a représenté sur les figures 3 à 8 un clapet 42 conforme à un deuxième exemple de réalisation de l'invention.

Ce clapet 42 comporte une partie supérieure 43 fixe pourvue d'une collerette 44 de fixation sur la paroi du réservoir, non représenté, d'une tubulure centrale 45 et d'une tubulure excentrée 46 servant respectivement au raccordement du clapet 42 respectivement au circuit de dégazage et au conduit d'aspiration précédemment décrits.

La tubulure centrale 45 présente à son extrémité inférieure 46 un rebord intérieur 47 servant à l'accrochage d'un élément formant siège 48, mobile selon l'axe Y sensiblement vertical du clapet 42.

Cet élément formant siège 48 comporte un corps annulaire 49 muni à son extrémité supérieure de dents 50 venant s'accrocher sur le rebord 47.

Le corps 49 est prolongé radialement vers l'extérieur au voisinage de son extrémité inférieure par une collerette 51.

Une lèvre annulaire 52 fait saillie sous la collerette 51 dans le prolongement du corps 49.

La partie supérieure fixe 43 du clapet 42 comporte une jupe tubulaire 53 coaxiale à la tubulure centrale 45 et définissant autour de cette dernière une gorge annulaire 54, dans le fond de laquelle débouche la tubulure excentrée 46.

Le clapet 42 comporte un organe 55 mobile verticalement selon l'axe Y, à l'intérieur duquel est situé l'élément formant siège 48.

Cet organe 55 comporte en partie supérieure un plateau annulaire 56 disposé dans la gorge 54 de manière à coulisser avec un faible jeu dans celle-ci.

Le plateau 56 définit à l'intérieur de la gorge 54 une chambre annulaire 57 communiquant par la tubulure 46 avec le conduit d'aspiration, non représenté.

Une paroi 58 présentant un épaulement 59 prolonge inférieurement le plateau 56.

Une bague de guidage 60 est rapportée sur l'extrémité inférieure de la paroi 58.

La paroi 58 comporte une lèvre annulaire 61 qui fait saillie vers le bas sur l'épaulement 59 pour venir en appui sur la collerette 51 de l'élément formant siège 48 lorsque le clapet est dans la configuration de la figure 4.

La paroi 58 comporte en outre une série d'ouvertures 64 situées sous l'épaulement 59, permettant d'établir une communication avec l'intérieur du réservoir.

Un premier élément d'obturation 65 est monté à coulissement dans la bague de guidage 60.

Cet élément d'obturation 65 comporte une paroi supérieure 66 s'étendant perpendiculairement à l'axe Y, traversée en son centre par un orifice central.

La paroi supérieure 66 comporte en outre du côté de l'élément formant siège 48, une surface d'appui annulaire 68 formant légèrement saillie et contre laquelle peut venir s'appliquer de manière sensiblement étanche la lèvre annulaire 52 lorsque le clapet 42 est dans la configuration de la figure 5, comme cela sera expliqué plus loin.

La paroi supérieure 66 est également percée d'orifices 69 situés radialement à l'extérieur de la surface d'appui 68.

Lorsque le clapet 42 est au repos, comme représenté sur la figure 4, la paroi supérieure 66 repose par sa périphérie 70 sur un épaulement 71 de la bague de guidage 60.

La paroi supérieure 66 est prolongée vers le bas par une paroi latérale 72 cylindrique, pourvue d'ouvertures 73 en partie inférieure.

Un élément d'extrémité 75 est rapporté sur l'extrémité inférieure de la paroi latérale 72.

Cet élément d'extrémité 75 est ouvert uniquement vers le bas et renferme un volume d'air 76 suffisant pour que le premier élément d'obturation présente une flottabilité positive dans le carburant liquide.

Un deuxième élément d'obturation 77 est logé dans l'espace 78 intérieur à la paroi latérale 72, entre la paroi supérieure 66 du premier élément d'obturation 65 et la paroi supérieure 79 de l'élément d'extrémité 75.

Cet élément d'obturation 77 présente un corps cylindrique 80 fermé à son extrémité supérieure par une paroi 81 et ouvert uniquement vers le bas, de manière à renfermer un volume d'air 82 suffisant pour assurer la flottaison dans le carburant liquide.

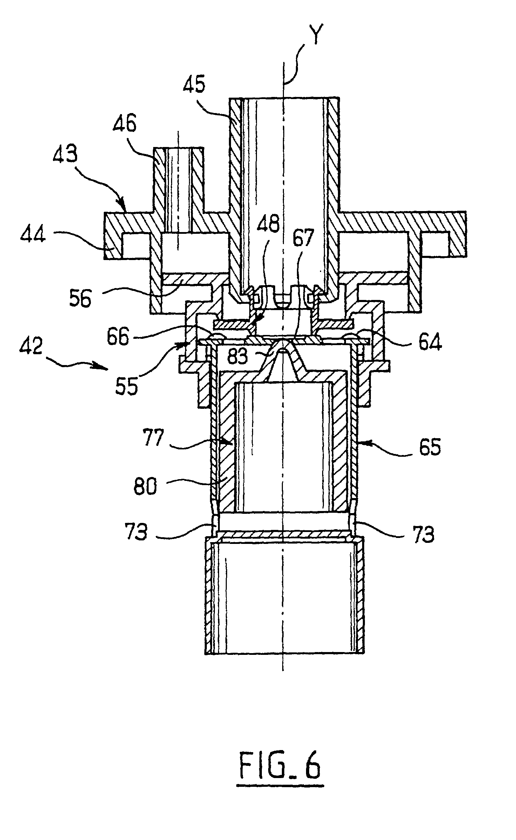

Le deuxième élément d'obturation 77 comporte à sa partie supérieure un bossage 83 conformé pour obturer l'orifice central 67 de la paroi supérieure 66 du premier élément d'obturation 65 lorsque le clapet est dans la configuration de la figure 6, comme cela sera précisé plus loin.

Le fonctionnement du clapet 42 est le suivant.

Pendant le remplissage, le moteur est à l'arrêt et le conduit d'aspiration n'est pas sous dépression, de sorte que la chambre annulaire 57 est à la même pression que l'air présent dans le réservoir.

Par ailleurs, le réservoir est vide de sorte que le deuxième élément d'obturation 77 pèse de tout son poids sur le premier élément d'obturation 65 qui lui-même repose entièrement sur la bague de guidage 60 de l'organe 55, lequel est en appui par la lèvre 61 sur la collerette 51 de l'élément formant siège 48, comme représenté sur la figure 4.

Les dents 50 de l'élément formant siège 48 s'accrochent sur le rebord intérieur 47 de la tubulure 45 pour retenir l'ensemble.

Dans cette configuration, le clapet 42 offre une section de passage maximum à l'écoulement gazeux quittant le réservoir, chassé par le carburant entrant.

Ce courant gazeux pénètre principalement dans le clapet 42 par les ouvertures 64 et traverse le corps de l'élément formant siège 48 pour gagner par la tubulure centrale 45 le conduit de dégazage.

Lorsque le niveau du carburant liquide dans le réservoir atteint l'élément d'extrémité 75, le premier élément d'obturation 65 se soulève progressivement sous l'effet de la montée du carburant dans le réservoir jusqu'à venir en butée par la surface d'appui 68 contre la lèvre 52 de l'élément formant siège 48, comme illustré sur la figure 5.

Dans cette configuration, l'air et les vapeurs de carburant ne peuvent gagner le conduit de dégazage qu'au travers de l'orifice central 67 de la paroi supérieure 66 du premier élément d'obturation 65, ce qui augmente la perte de charge opposée par le clapet à l'écoulement gazeux quittant le réservoir.

Le remplissage du réservoir est ainsi rendu plus difficile, ce qui provoque un premier déclenchement du pistolet de remplissage.

Lorsque le niveau du carburant atteint le deuxième élément d'obturation 77, celui-ci se soulève progressivement jusqu'à venir obturer par le bossage 83 l'orifice central 67 comme illustré sur la figure 6, ce qui provoque un deuxième voire un troisième déclenchement du pistolet de remplissage.

Dans cette configuration, le clapet est sensiblement fermé et le remplissage du réservoir n'est plus possible.

On assure ainsi la présence d'un matelas gazeux au-dessus du niveau du carburant liquide dans le réservoir et l'on évite le sur-remplissage de ce dernier.

Lorsque le moteur est mis en marche, le conduit d'aspiration est sous dépression et le plateau 56 de l'organe 55 est déplacé vers le haut dans la gorge 54 sous l'effet de cette dépression.

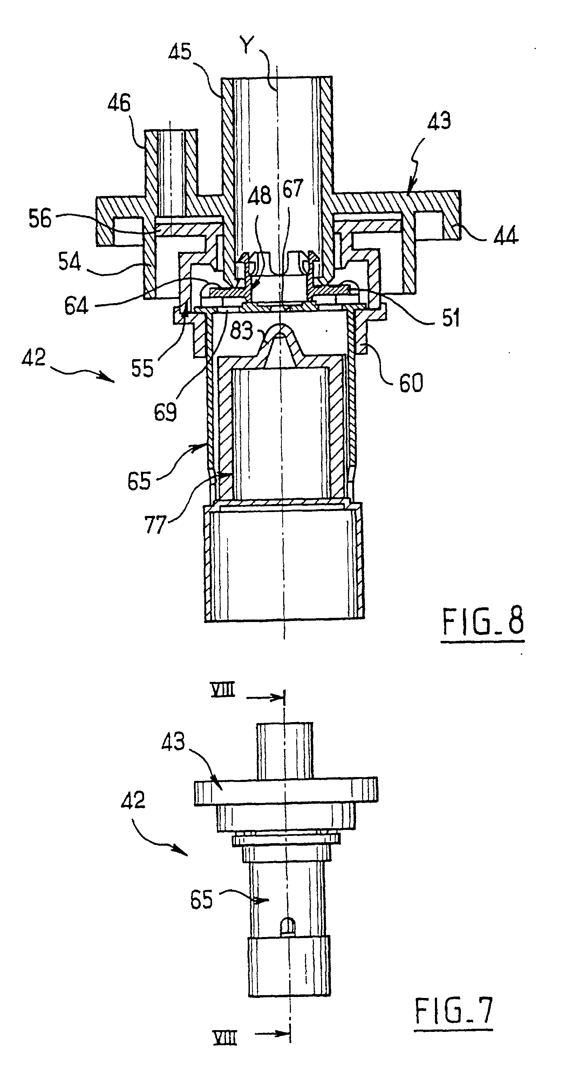

L'organe 55 entraîne dans son déplacement le premier élément d'obturation 65 qui lui-même entraîne l'élément formant siège 48 jusqu'à ce que la collerette 51 vienne en appui contre l'extrémité inférieure de la tubulure 45, comme représenté sur la figure 8.

Le déplacement vers le haut du premier élément d'obturation 65 a pour conséquence que l'orifice central 67 n'est plus obturé par le bossage 83 du deuxième élément d'obturation 77.

Ainsi, même lorsque le réservoir est plein, une communication est établie immédiatement entre l'intérieur du réservoir et le circuit de dégazage par l'intermédiaire successivement des ouvertures 64, des orifices 69 et de l'orifice central 67, permettant au réservoir de respirer.

En cas de vague de carburant dans le réservoir, le deuxième élément d'obturation 77 peut se soulever et obturer momentanément, au passage de la vague, l'orifice central 67, empêchant ainsi que des projections de carburant liquide ne gagnent la tubulure 45.

Bien entendu, l'invention n'est pas limitée aux exemples de réalisation qui viennent d'être décrits.

On peut ainsi utiliser, à la place de la dépression créée par le fonctionnement de la pompe à essence, des moyens magnétiques par exemple pour assurer le déplacement vers le haut de l'organe 18 de l'exemple de réalisation des figures 1 et 2 ou de l'organe 55 de l'exemple de réalisation des figures 3 à 8.

Ces moyens magnétiques peuvent comporter par exemple un bobinage excité électriquement de manière à exercer une force électromagnétique sur l'organe 18 ou 55, ce dernier étant alors aimantable.

Finalement, on dispose grâce à l'invention d'un moyen particulièrement fiable et sûr pour modifier la configuration d'un clapet pour réservoir à carburant en fonction des différents états du véhicule, tout en permettant d'éviter le sur-remplissage du réservoir et les risques de projection de carburant liquide vers le canister.

## Revendications

1. Clapet pour réservoir à carburant, destiné à être relié à un circuit de dégazage définissant un passage pour un écoulement gazeux quittant le réservoir, comportant au moins un organe mobile (18 ; 55) pouvant être contrôlé en déplacement pour modifier la configuration dudit clapet (1 ; 42), le clapet comportant un premier élément d'obturation (26 ; 65) mobile apte à être entraîné en déplacement par l'organe mobile (18 ; 55) d'une première position vers une deuxième position, le passage de la première position à la deuxième réduisant la section de passage offerte à l'écoulement gazeux, **caractérisé par le fait que** le premier élément d'obturation comporte un orifice (29 ; 67) mettant en communication l'intérieur du réservoir avec le circuit de dégazage.

2. Clapet selon la revendication 1, **caractérisé par le fait que** le clapet est agencé de manière à ce que ledit organe mobile (18 ; 55) puisse être entraîné en déplacement sous l'effet du fonctionnement d'une pompe à carburant (3).

3. Clapet selon la revendication 2, **caractérisé par le fait qu'**il est agencé de manière à ce que l'organe mobile (18 ; 55) soit entraîné en déplacement de la première position (fig. 1 ; fig. 4) vers la deuxième position (fig. 2 ; fig. 8) sous l'effet d'une variation de pression créée par le fonctionnement de la pompe (3).

4. Clapet selon la revendication 3, **caractérisé par le fait que** ladite variation de pression est une dépression créée par effet Venturi.

5. Clapet selon l'une quelconque des revendications précédentes, **caractérisé par le fait qu'**il comporte un deuxième élément d'obturation (36 ; 77) apte à obturer l'orifice (29 ; 67) dudit premier élément d'obturation (26 ; 65).

6. Clapet selon la revendication 5, **caractérisé par le fait que** ledit deuxième élément d'obturation (36 ; 77) obture ledit orifice (29 ; 67) en cas de retournement accidentel du véhicule.

7. Clapet selon la revendication 5 ou 6, **caractérisé par le fait que** ledit deuxième élément d'obturation (77) présente une flottabilité positive de manière à obturer ledit orifice (67) sous l'effet d'une vague de carburant dans le réservoir.

8. Clapet selon l'une quelconque des revendications précédentes, **caractérisé par le fait que** ledit premier élément d'obturation (26 ; 65) s'applique contre un siège fixe (27) dans sa deuxième position.

9. Clapet selon l'une quelconque des revendications 1 à 7, **caractérisé par le fait qu'**il comporte un élément formant siège (48), mobile, contre lequel s'applique ledit premier élément d'obturation (65) dans sa deuxième position d'obturation partielle.

10. Clapet selon la revendication précédente, **caractérisé par le fait que** ledit élément formant siège (48) est déplaçable entre une position dans laquelle il vient en butée contre ledit organe mobile (55) et une position dans laquelle il vient en prise sur un rebord (47) d'une partie fixe (43) du clapet.

11. Clapet selon la revendication 10, **caractérisé par le fait que** ledit premier élément d'obturation (65) présente une flottabilité positive et **par le fait que** le clapet (42) est agencé de manière à ce que ledit premier élément d'obturation (65) prenne sa deuxième position, d'obturation partielle, sous l'effet de la montée du carburant liquide dans le réservoir en fin de remplissage.

12. Clapet selon l'une quelconque des revendications précédentes, **caractérisé par le fait que** le premier élément d'obturation doit être déplacé vers le haut pour passer de la première position à la deuxième position.

13. Clapet selon la revendication 1, **caractérisé par le fait qu'**il comporte :
- un organe (55) mobile selon un axe (Y) sensiblement vertical, depuis une position inférieure lorsque le réservoir est en cours de remplissage et le moteur à l'arrêt à une position supérieure lorsque le moteur est en marche,
- un élément formant siège (48), mobile entre une position basse dans laquelle il s'accroche sur une partie fixe (43) du clapet et supporte l'organe mobile (55) et une position haute dans laquelle il vient en butée contre ladite partie fixe,
- un premier élément d'obturation (65) présentant un orifice (67) et déplaçable, lorsque l'organe mobile (55) est en position basse, entre une première position dans laquelle il est écarté dudit élément formant siège et une deuxième position dans laquelle il vient en appui contre ledit élément formant siège et réduit la section de passage offerte à l'écoulement gazeux quittant le clapet, en ne permettant le passage qu'à travers ledit orifice (67), ce premier élément d'obturation présentant une flottabilité positive de manière à passer de sa première position vers sa deuxième position sous l'effet de la montée du carburant dans le réservoir,
- un deuxième élément d'obturation (77) mobile par rapport au premier (65) entre une première position dans laquelle il pèse sur le premier élément d'obturation (65) et une deuxième position dans laquelle il obture ledit orifice (67), ce deuxième élément d'obturation (77) présentant une flottabilité positive de manière à passer de sa première position vers sa deuxième position sous l'effet de la montée du carburant liquide dans le réservoir et fermer le clapet lorsque le réservoir est en fin de remplissage et le moteur à l'arrêt, l'organe mobile étant alors dans sa position basse,
clapet dans lequel, après la mise en marche du moteur, l'organe mobile est en position haute et a entraîné l'élément formant siège dans une position haute avec le premier élément d'obturation (65) maintenu en appui contre l'élément formant siège (48) par ledit organe mobile (55), l'orifice (67) du premier élément d'obturation (65) étant alors normalement ouvert en l'absence de vagues de carburant dans le réservoir, le deuxième élément d'obturation (77) étant apte à obturer cet orifice sous l'effet d'une vague de carburant dans le réservoir.

14. Réservoir (2) à carburant de véhicule automobile équipé d'un clapet (1 ; 20 ; 30) tel que défini dans l'une quelconque des revendications précédentes.

## Claims

1. Valve for a fuel tank, intended to be connected to a venting circuit defining a passage for gaseous flow leaving the tank, comprising at least one mobile member (18; 55) the movement of which can be controlled so as to modify the configuration of the said valve (1; 42), the valve comprising a first mobile shutter element (26; 65) able to be made to move by the mobile member (18; 55) from a first position into a second position, the passage from the first position to the second reducing the passage cross section offered to the gaseous flow, **characterized in that** the first shutter element comprises an orifice (29; 67) placing the inside of the tank in communication with the venting circuit.

2. Valve according to Claim 1, **characterized in that** the valve is arranged in such a way that the mobile member (18; 55) can be made to move under the effect of the operation of a fuel pump (3).

3. Valve according to Claim 2, **characterized in that** it is arranged in such a way that the mobile member (18; 55) is made to move from the first position (Fig. 1; Fig. 4) to the second position (Fig. 2; Fig. 8) under the effect of a variation in pressure which is created by the operation of the pump (3).

4. Valve according to Claim 3, **characterized in that** the said variation in pressure is a depression created by a venturi effect.

5. Valve according to any one of the preceding claims, **characterized in that** it comprises a second shutter element (36; 77) able to shut off the orifice (29; 67) of the said first shutter element (26; 65).

6. Valve according to Claim 5, **characterized in that** the said second shutter element (36; 77) shuts off the said orifice (29; 67) if the vehicle accidentally rolls over.

7. Valve according to Claim 5 or 6, **characterized in that** the said second shutter element (77) has positive buoyancy so that it shuts off the said orifice (67) under the effect of a surge of fuel in the tank.

8. Valve according to any one of the preceding claims, **characterized in that** the said first shutter element (26; 65) rests against a fixed seat (27) in its second position.

9. Valve according to any one of Claims 1 to 7, **characterized in that** it comprises an element forming a mobile seat (48) against which the said first shutter element (65) rests in its second, partially shut-off position.

10. Valve according to the preceding claim, **characterized in that** the said seat-forming element (48) can be moved between a position in which it abuts against the said mobile member (55) and a position in which it engages with a rim (47) of a fixed part (43) of the valve.

11. Valve according to Claim 10, **characterized in that** the said first shutter element (65) has positive buoyancy and **in that** the valve (42) is arranged in such a way that the said first shutter element (65) adopts its second, partially shut-off position under the effect of the rise in liquid fuel in the tank at the end of filling.

12. Valve according to any one of the preceding claims, **characterized in that** the first shutter element has to be moved upwards to pass from the first position to the second position.

13. Valve according to Claim 1, **characterized in that** it comprises:
- a member (55) that can move along a substantially vertical axis (Y) from a lower position when the tank is in the process of being filled and the engine is switched off to an upper position when the engine is running,
- a seat-forming element (48) that can move between a lowered position in which it catches on a fixed part (43) of the valve and supports the mobile member (55), and a raised position in which it abuts against the said fixed part,
- a first shutter element (65) exhibiting an orifice (67) and able to be moved, when the mobile member (55) is in the lowered position, between a first position in which it is separated from the said seat-forming element and a second position in which it bears against the said seat-forming element and reduces the passage cross section offered to the gaseous flow leaving the valve, allowing passage only through the said orifice (67), this first shutter element having positive buoyancy so as to pass from its first position to its second position under the effect of the rise in fuel in the tank,
- a second shutter element (77) able to move with respect to the first one (65) between a first position in which it bears down on the first shutter element (65) and a second position in which it shuts off the said orifice (67), this second shutter element (77) exhibiting positive buoyancy so as to pass from its first position to its second position under the effect of the rise in liquid fuel in the tank and close the valve when the tank is at the end of filling with the engine switched off, the mobile member then being in its lowered position,
in which valve, once the engine has been switched on, the mobile member is in the raised position and has carried the seat-forming element into a raised position with the first shutter element (65) held bearing against the seat-forming element (48) by the said mobile member (55), the orifice (67) of the first shutter element (65) therefore being normally open when there are no surges of fuel in the tank, the second shutter element (77) being able to shut off this orifice under the effect of a surge of fuel in the tank.

14. Motor vehicle fuel tank (2) equipped with a valve (1; 20; 30) as defined in any one of the preceding claims.

## Patentansprüche

1. Ventil für einen Kraftstoffbehälter zur Verbindung mit einem einen Auslass für die Gasausströmung aus dem Kraftstoffbehälter ausbildenden Entgasungskreislauf, das aus mindestens einem in Bewegung kontrollierbaren mobilen Organ (18, 55) besteht, um so die Konfiguration dieses Ventils (1, 42) zu ändern, wobei das Ventil ein erstes mobiles Schließelement (26, 65) umfasst, das durch das mobile Element von einer ersten Position in eine zweite Position bewegbar ist, und der Übergang von der ersten Position in die zweite Position den für die Gasausströmung verfügbaren Auslassquerschnitt mindert, **dadurch gekennzeichnet, dass** das erste Schließelement eine Öffnung (29, 67) aufweist, die den Innenbereich des Kraftstoffbehälters mit dem Entgasungskreislauf verbindet.

2. Ventil nach Anspruch 1, **dadurch gekennzeichnet, dass** das Ventil so angeordnet wird, dass das mobile Element (18, 55) unter der Wirkung einer Kraftstoffpumpe (3) bewegbar ist.

3. Ventil nach Anspruch 2, **dadurch gekennzeichnet, dass** es so angeordnet wird, dass das mobile Element (18, 55) unter der Wirkung einer durch den Betrieb der Pumpe (3) erzeugten Druckschwankung von der ersten Position (Abb. 1, Abb. 4) in die zweite Position (Abb. 2, Abb. 8) bewegbar ist.

4. Ventil nach Anspruch 3, **dadurch gekennzeichnet, dass** es sich bei der Druckschwankung um einen Druckabfall handelt, der durch den Venturi-Effekt erzeugt wird.

5. Ventil nach einem der vorstehenden Ansprüche, **dadurch gekennzeichnet, dass** es ein zweites Schließelement (36, 77) aufweist, durch das die Öffnung (29, 67) des ersten Schließelements (26, 65) verschließbar ist.

6. Ventil nach Anspruch 5, **dadurch gekennzeichnet, dass** das zweite Schließelement (36, 77) die Öffnung (29, 67) im Fall des durch einen Unfall verursachten Überschlags des Fahrzeugs schließt.

7. Ventil nach Anspruch 5 oder 6, **dadurch gekennzeichnet, dass** das zweite Schließelement (77) einen positiven Auftrieb aufweist, so dass es die besagte Öffnung (67) unter der Wirkung einer Kraftstoffwelle im Kraftstoffbehälter schließt.

8. Ventil nach einem der vorstehenden Ansprüche, **dadurch gekennzeichnet, dass** das erste Schließelement (26, 65) in seiner zweiten Position gegen einen festen Sitz (27) aufgebracht wird.

9. Ventil nach einem der Ansprüche 1 bis 7, **dadurch gekennzeichnet, dass** es ein einen mobilen Sitz (48) ausbildendes Element aufweist, gegen den das erste Schließelement (65) in seiner teilweisen Schließposition aufgebracht wird.

10. Ventil nach dem vorstehenden Anspruch, **dadurch gekennzeichnet, dass** dieses einen Sitz (48) ausbildende Element zwischen einer Position, in der es gegen das mobile Element (55) anschlägt und einer Position, in der es auf den Rand (47) eines festen Teil (43) des Ventils greift, bewegbar ist.

11. Ventil nach Anspruch 10, **dadurch gekennzeichnet, dass** das erste Schließelement (65) einen positiven Auftrieb darstellt und das Ventil (42) so angeordnet wird, dass das erste Schließelement (65) seine zweite teilweise Schließposition unter der Wirkung des Ansteigens des flüssigen Kraftstoffs im Kraftstoffbehälter nach dem Füllen einnimmt.

12. Ventil nach einem der vorstehenden Ansprüche, **dadurch gekennzeichnet, dass** das erste Schließelement nach oben bewegt werden muss, um von der ersten Position in die zweite Position zu wechseln.

13. Ventil nach Anspruch 1, **dadurch gekennzeichnet, dass** es umfasst:
- ein nach einer Achse (Y) von einer unteren Position, in der der Kraftstoffbehälter gefüllt und der Motor abgestellt ist, zu einer oberen Position, in der der Motor läuft, leicht vertikales mobiles Element (55),
- ein zwischen einer unteren Position, in der es an einem festen Teil (43) des Ventils haftet und das mobile Element (55) aufnimmt, und einer oberen Position, in der es gegen das feste Teil anschlägt, einen mobilen Sitz (48) ausbildendes Element,
- ein erstes Schließelement (65) mit einer Öffnung (67), das, wenn das mobile Element (55) sich in der unteren Position befindet, zwischen einer ersten Position, in der es vom einen Sitz ausbildenden Element entfernt gehalten wird, und einer zweiten Position, in der es sich auf das einen Sitz ausbildende Element stützt und den zur Gasausströmung aus dem Ventil gebotenen Auslassquerschnitt verkleinert, beweglich ist, so dass der Austritt einzig über die Öffnung (67) ermöglicht wird, wobei dieses erste Schließelement einen positiven Auftrieb aufweist, so dass es von seiner ersten Position in seine zweite Position unter dem Einfluss des Anstiegs des Kraftstoffs im Kraftstoffbehälter wechselt,
- ein im Vergleich zum ersten Schließelement (65) zwischen einer ersten Position, in der es auf dem ersten Schließelement (65) lastet und einer zweiten Position, in der es die Öffnung (67) schließt, mobiles zweites Schließelement (77), wobei dieses zweite Schließelement (77) einen positiven Auftrieb aufweist, so dass es unter dem Einfluss des Anstiegs des flüssigen Kraftstoffs im Kraftstoffbehälter von seiner ersten Position in seine zweite Position wechselt und das Ventil schließt, sobald der Kraftstoffbehälter gefüllt wurde und der Motor abgestellt ist, das mobile Element befindet sich in diesem Fall in seiner unteren Position,
Ventil, bei dem das mobile Element sich nach der Inbetriebnahme des Motors in der oberen Position befindet und das einen Sitz ausbildende Element mit dem durch das mobile Element (55) gegen dieses einen Sitz (48) ausbildende Element gestützten ersten Schließelement (65) in seine obere Position gebracht hat, wobei die Öffnung (67) des ersten Schließelements (65) bei Nichtvorhandensein einer Kraftstoffwelle im Kraftstoffbehälter normal geöffnet wird und das zweite Schließelement (77) geeignet ist, diese Öffnung unter einer Kraftstoffwelle im Kraftstoffbehälter zu schließen.

14. Kraftstoffbehälter (2) eines Kraftfahrzeugs, der, wie in einem der vorstehenden Ansprüche beschrieben, mit einem Ventil (1, 20, 30) ausgestattet ist.
